# EUROPEAN PATENT APPLICATION

(11) **EP 4 650 222 A1**
(43) Date of publication of application: **19.11.2025**
(21) Application number: 24176411.7
(22) Date of filing: 16.05.2024
(51) Int. Cl.: B60Q 1/26, B60Q 1/38, F21S 43/237, F21S 43/241, F21S 43/242, F21S 43/243, F21S 43/247, F21S 43/249, F21S 43/251, F21S 43/235, F21W 103/25

(54) **TURN SIGNAL SYSTEM FOR A VEHICLE**

(71) Applicant: Motherson Innovations Deutschland GmbH, 70327 Stuttgart (DE)
(72) Inventor: Landes, Luca, 70188 Stuttgart (DE); Schmidt, Oliver, 70329 Stuttgart (DE)

(57) **Abstract**

Embodiments of the present disclosure relate to a turn signal system 100 for a vehicle. The turn signal system 100 comprises a power source 102 and a light tube 106. The power source 102 and the light tube 106 are inter-coupled by any one of a plurality of light guides 104 and a light guide 204.

## Description

The present disclosure relates to a turn signal system for a vehicle.

With an ever-increasing rate of research and developments in the field of vehicles, many new features have been added into the vehicle. The vehicles of the present generation have also been loaded-up with new components. This has resulted in a reduction of size of the various components. Further, the reduced size of various components creates a need for improved components.

An example of such a component is a turn signal system for a vehicle. The turn signal system may indicate an event of side turning of a vehicle on pressing a side turn lever. The turn signal system may be configured on an outside rear view mirror head. The existing turn signal system may have a power source placed in same plane as a light tube. However, with the limited size constraint, the space for placing the power source and light tube in the same plane becomes very challenging.

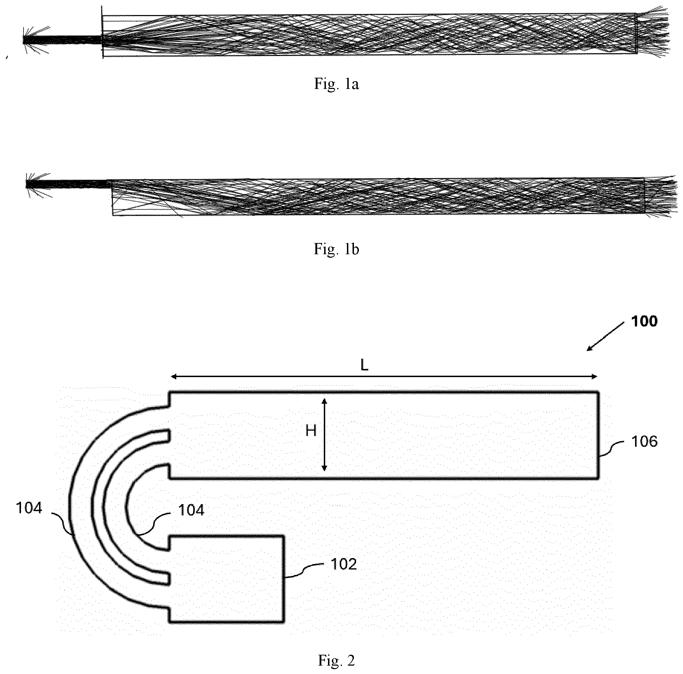

In addition, the existing turn signal system has a problem of non-uniform illumination of the light tube as shown in Fig. 1a and Fig. 1b. The problem of non-uniform illumination of the light tube is due to formation of dark spot near an entrance of light into the light tube.

Therefore, there is a need to develop such a turn signal system that solves the challenge of placing the power source and the light tube in limited space availability. There is also a need to develop such a turn signal system that reduces the problem of non-uniform illumination of the light tube of the turn signal system.

Hence, it is an object of the present disclosure to provide a turn signal system which solves the challenge of placing the power source and the light tube in limited space availability.

It is yet another object of the present disclosure to provide a turn signal system which would provide uniform illumination of the light tube.

This object is solved by a turn signal system for a vehicle of claims 1 and 2. Claims 3-12 describe embodiments of the turn signal system.

Accordingly, an aspect of present disclosure relates to a turn signal system for a vehicle, the system comprising: a light source configured for emitting a light; a light tube having a first end and second end, wherein the light tube has a plurality of apertures at the first end; and a plurality of light guides having a first end and a second end, wherein the first end of the plurality of light guides is configured to couple with the light source, and the second end of the plurality of the light guides is configured to couple with the plurality of the apertures correspondingly.

Yet another aspect of present disclosure relates to a turn signal system for a vehicle, the system comprising: a light source configured for emitting a light; a light tube having a first end and second end, wherein the light tube has a plurality of apertures at the first end; and a light guide having a first end and a plurality of second ends, wherein the first end of the light guide is configured to couple with the light source, and the plurality of second ends of the light guide are configured to couple with the plurality of the apertures correspondingly.

Yet another aspect of present disclosure relates to the turn signal system for the vehicle further comprising a transparent outer shell envelopes the light tube.

Yet another aspect of present disclosure relates to the turn signal system for the vehicle further comprising a control system connected to the light source.

Yet another aspect of present disclosure relates to the turn signal system for the vehicle, wherein the turn signal system is configured on the outside-rear view mirror head.

Yet another aspect of present disclosure relates to the turn signal system for the vehicle, wherein the light source is configured to emit at least one color light.

Yet another aspect of present disclosure relates to the turn signal system for the vehicle, wherein at least one of the plurality of light guides is curved.

Yet another aspect of present disclosure relates to the turn signal system for the vehicle, wherein the light guide is curved.

Yet another aspect of present disclosure relates to the turn signal system for the vehicle, wherein the light guide is a Y-shaped light guide.

Yet another aspect of present disclosure relates to the turn signal system for the vehicle, wherein each of the plurality of apertures at the first end are located equidistantly along height H of the of the light tube.

Yet another aspect of present disclosure relates to the turn signal system for the vehicle, wherein the light source and the light tube lie in different planes.

The disclosure also provides an outside-rear view mirror of a vehicle comprising the turn signal system according to the present disclosure.

Other aspects, advantages, and salient features of the present disclosure will become apparent to those skilled in the art from the following detailed description, which taken in conjunction with the annexed drawings, discloses exemplary embodiments of the disclosure, wherein:
Fig. 1a and Fig. 1b show a side view of illumination by an existing turn signal system for a vehicle.
Fig. 2 shows a 2-D side view of a turn signal system for a vehicle in accordance to an embodiment of the present disclosure.
Fig. 3 shows an outside-rear view mirror having a turn signal system for a vehicle in accordance to an embodiment of the present disclosure.
Fig. 4 shows a 2-D side view of a turn signal system for a vehicle in accordance to an embodiment shown in Fig. 3.
Fig. 5 shows a side view of illumination by a turn signal system for a vehicle in accordance to all the embodiments of the present disclosure.

As used herein below, the term "vehicle" refers to any motor or battery driven automobile with or without trailers driven by a driver. For example, a vehicle may be a scooter, a car, a truck, a tractor, a bus, and a trailer.

The present disclosure relates to a turn signal system 100 for a vehicle. The turn signal system 100 may be configured on an outside-rear view mirror of the vehicle. The turn signal system 100 may be configured to show an event of activation of side turn indicator of the vehicle.

Further, as shown in Fig.2, the turn signal system 100 encompasses a light source 102, a plurality of light guides 104 and a light tube 106.

The light source 102 may be any conventional known light source known to a person ordinary skilled in the art. In embodiment, the light source 102 may be a RGB LED. The light source 102 may be configured to emit at least one color light at an instant. In an embodiment, the light source 102 may emit different color lights sequentially. Further, the light source 102 may be connected to a control system. The control system may be a PCB which may receive input of activation of the side turn indicator. In another embodiment, the light source 102 may receive direct input from the side turn indicator. Furthermore, Figs. 2 -4 show the light source 102 coupled to the light tube 106.

The light tube 106 may be configured to illuminate on receiving a light from the light source 102. The light tube 106 may be placed on a different plane than the light source 102. In an embodiment, the light tube 106 may be placed above the light source 102. In yet another embodiment, the light tube 106 may be placed below the light source 102. The illumination of the light tube 106 may act as the indication of the event of activation of the side turn indicator of the vehicle. The light tube 106 may be any conventional known light tube known to a person ordinary skilled in the art. The light tube 106 may have, but not limited to, a circular cross-section and a square cross-section. The light tube 106 may be, but not limited to, a cylindrically shaped and a cuboidal shaped. The light tube 106 may have a length L, a height H and a width W. Further, the light tube 106 may have a first end and a second end along the length L. The first end of the light tube 106 may have a plurality of apertures. The plurality of apertures may be placed equidistantly along the height H of the first end. Furthermore, the light tube 106 may be enveloped by a transparent outer shell. The transparent outer shell may act as a protective covering and is made up of conventionally known material such as polymethylmethacrylate and polycarbonate. Further, transparent outer shell may also be a light enhancer protective covering. Further in an embodiment, as shown in Figs. 2, the light source 102 may be coupled with the light tube 106 by the plurality of light guides 104.

The plurality of light guides 104 may be a conventionally known light guide known to person ordinarily skilled in the art. The plurality of light guides 104 may be made up made up of conventionally known material such as polymethylmethacrylate and polycarbonate. As mentioned above, the plurality of light guides 104 may be configured to inter-couple the light source 102 and the light tube 106. Each of plurality of the light guides 104 encompasses a first end and second end. The first end of each of the plurality of the light guides 104 may couple with the light source, whereas the second end of each of the plurality of the light guides 104 may couple with the plurality of the apertures correspondingly. The second end of each of the plurality of light guides 104 may have same cross section area as the plurality of apertures of the light tube 106. The plurality of light guides 104 may be a flexible light guide or rigid light guide. The plurality of light guides 104 may be bent to couple the light source 102 and light pipe 106 lying in the different planes. In an embodiment, each of the plurality of light guides 104 may be bent resulting in an elbow bend. In another embodiment, each of the plurality of light guides 104 may be bent to form a 180 degrees bend. In another embodiment, one of the light guide 104 may be curved, while the remaining light guide 104 may be straight. Further, each of the plurality of light guides 104 may have different or same cross-section area.

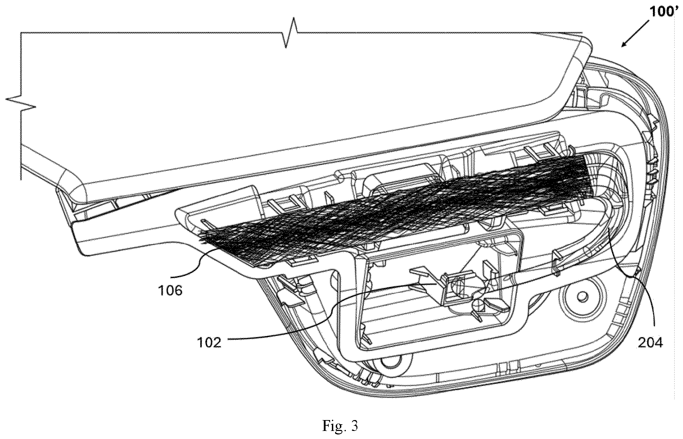

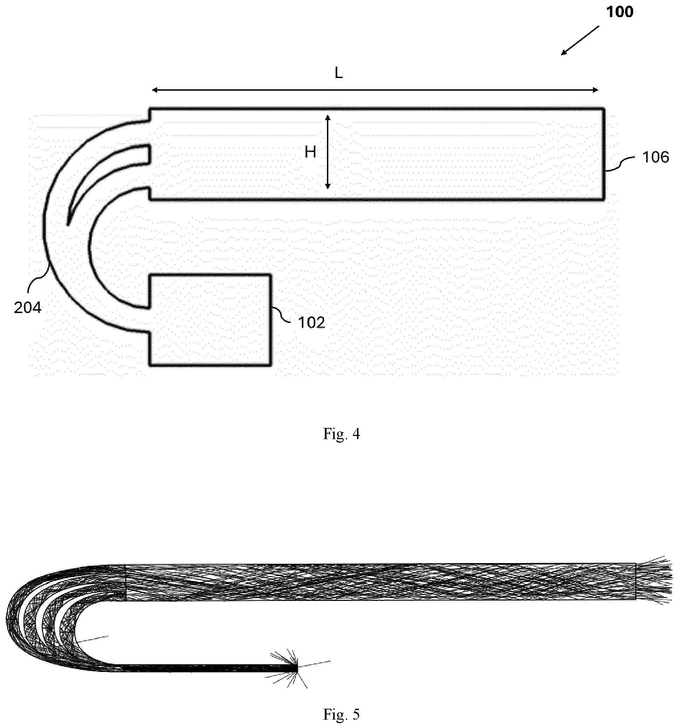

Further, Fig. 3 shows an outside-rear view mirror 100' having the light source 102, the light tube 106 and a light guide 204. As shown in Fig. 3, the light source 102 may be coupled with the light tube 106 by the light guide 204. Fig. 4 also shows the light source 102 coupled with the light tube 106 by the light guide 204. The light guide 204 may be a flexible light guide or rigid light guide. The light guide 204 may be bent to couple the light source 102 and light pipe 106 lying in the different planes. In an embodiment, the light guide 204 may be bent resulting in an elbow bend. In another embodiment, the light guide 204 may be bent to form a form a 180 degrees bend. The light guide 204 has a first end and a plurality of second ends. The first end of the light guide 204 may couple with the light source, whereas the plurality of second ends of the light guide 204 may couple with the plurality of the apertures correspondingly. Further, each of the plurality of the second ends of the light guide 204 may have different or same cross-section area. Furthermore, in an embodiment, the light guide 204 is a Y-shaped light guide.

In an embodiment, the turn signal system 100 may comprise of plurality of the light tubes 106 such that each of plurality of the light tubes 106 may be coupled to the plurality of light guides 104. In yet another embodiment, the turn signal system 100 may comprise of plurality of the light tubes 106 such that each of plurality of the light tubes 106 may be coupled to the plurality of light guides 204. In yet another embodiment, the turn signal system 100 may comprise of plurality of the light tubes 106 such that one of the plurality of the light tubes 106 may be coupled to the plurality of light guides 104 and the remaining may be coupled to the light guide 204.

Therefore, the curved light guide inter-coupling light source and light tube solves the challenge of placing the power source and the light tube in limited space availability as shown in Fig. 5. Further, plurality of light guides inter-coupled to the light tube provides the uniform illumination of the light tube.

Although the subject matter of the present disclosure has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims, i.e. the features disclosed in the foregoing description, the claims, and the drawings may be essential, both individually and in any combination, for accomplishing the present disclosure in its various embodiments. The embodiments shown herein are only examples of the present disclosure and must therefore not be understood as being restrictive. Alternative embodiments considered by the skilled person are equally covered by the scope of protection of the present disclosure.

### List of References

100 Turn signal system
102 Light Source
104 Plurality of light guides (First embodiment)
106 Light tube
204 light guide (Second embodiment)
L Length of light tube
H Height of light tube
W Width of light tube
100' Outside-rear view mirror

## Claims

1. A turn signal system (100) for a vehicle, the turn signal system (100) comprising:
a light source (102) configured for emitting a light;
a light tube (106) having a first end and a second end, wherein the light tube (106) comprises a plurality of apertures at the first end; and
a plurality of light guides (104) having a first end and a second end, wherein
the first end of the plurality of light guides (104) is configured to couple with the light source (102), and
the second end of the plurality of the light guides (104) is configured to couple with the plurality of the apertures of the light tube (106) correspondingly.

2. A turn signal system (100) for a vehicle, the system (100) comprising:
a light source (102) configured for emitting a light;
a light tube (106) having a first end and a second end, wherein the light tube (106) comprises a plurality of apertures at the first end; and
a light guide (204) having a first end and a plurality of second ends, wherein
the first end of the light guide (204) is configured to couple with the light source (102), and the plurality of second ends of the light guide (204) are configured to couple with the plurality of the apertures the light tube (106) correspondingly.

3. The turn signal system (100) for the vehicle according to any of the preceding claims, further comprising a transparent outer shell envelopes the light tube (106).

4. The turn signal system (100) for the vehicle according to any of the preceding claims, further comprising a control system connected to the light source (102).

5. The turn signal system (100) for the vehicle according to any of the preceding claims, wherein the turn signal system (100) is coupled to the outside-rear view mirror head.

6. The turn signal system (100) for the vehicle according to any of the preceding claims, wherein the light source (102) is configured to emit at least one color light.

7. The turn signal system (100) for the vehicle according to claim 1, wherein at least one of the plurality of light guides (104) is curved.

8. The turn signal system (100) for the vehicle according to claim 2, wherein the light guide (204) is curved.

9. The turn signal system (100) for the vehicle according to claim 2, wherein the light guide (204) is a Y-shaped light guide.

10. The turn signal system (100) for the vehicle according to any of claims 1 and 2, wherein each of the plurality of apertures at the first end are located equidistantly along height (H) of the light tube (106).

11. The turn signal system (100) for the vehicle according to any of claims 1 and 2, wherein the light source (102) and the light tube (106) lie in different planes.

12. An outside-rear view mirror (100') of a vehicle comprising the turn signal system (100) according to any of the claims 1-11.
